# EUROPÄISCHE PATENTSCHRIFT

(11) **EP 3 498 915 B1**
(45) Veröffentlichungstag und Bekanntmachung des Hinweises auf die Patenterteilung: **14.10.2020**
(21) Anmeldenummer: 17206941.1
(22) Anmeldetag: 13.12.2017
(51) Int. Cl.: E01C 19/48, B60G 17/005

(54) **STRASSENFERTIGER MIT ANHEBBAREM CHASSIS**
ROAD FINISHER WITH RAISABLE CHASSIS
FINISSEUSE DE ROUTE POURVUE DE CHÂSSIS POUVANT ÊTRE RELEVÉ

(43) Veröffentlichungstag der Anmeldung: 19.06.2019
(73) Patentinhaber: Joseph Vögele AG, 67067 Ludwigshafen (DE)
(72) Erfinder: SCHMIDT, Thomas, 68723 Plankstadt (DE); GOTTERBARM, Tobias, 67141 Neuhofen (DE); BUSCHMANN, Martin, 67435 Neustadt (DE); SEIBEL, Martin, 76646 Bruchsal (DE)
(74) Vertreter: Grünecker Patent- und Rechtsanwälte PartG mbB

(56) Entgegenhaltungen:
- DE-U1- 29 907 733
- JP-A- 2008 106 514
- JP-U- S6 294 107
- JP-U- S58 163 376
- US-A- 3 552 764
- US-A1- 2015 102 571

## Beschreibung

Die vorliegende Erfindung betrifft Straßenfertiger mit einem zumindest in einem hinteren Bereich des Straßenfertigers gegenüber dem Fahrwerk anhebbaren Chassis.

Bekannte Straßenfertiger umfassen bezüglich einer Einbaufahrtrichtung vorne am Straßenfertiger einen Gutbunker zur Aufnahme von Einbaugut. Von dem Gutbunker wird das Einbaugut während des Einbaus über eine geeignete Längsfördereinrichtung in einen hinteren Bereich des Straßenfertigers gefördert. Dort wird das Einbaugut mittels einer Verteilerschnecke quer zur Einbaufahrtrichtung verteilt und so gleichmäßig einer von dem Straßenfertiger hinterher gezogenen Einbaubohle zum Verdichten des Einbauguts vorgelegt. Es ist aus der Praxis bekannt, die Verteilerschnecke höhenverstellbar an dem Chassis des Straßenfertigers anzubringen. Durch eine Höhenverstellung der Verteilerschnecke gegenüber dem Chassis kann der Straßenfertiger für den Einbau verschiedener Schichtdicken angepasst werden. Beispielweise kann die Verteilerschnecke gegenüber dem Chassis angehoben werden, um größere Schichtdicken einzubauen.

Nachteilig an einem solchen System ist, dass zum Einbau sehr dicker Schichten die Lage der Verteilerschnecke gegenüber dem Chassis signifikant nach oben verändert wird. Hierdurch kann es zu der Situation kommen, dass die Verteilerschnecke einen Materialauslass der Längsfördereinrichtung zumindest teilweise blockiert. Dadurch wird der Durchsatz von Einbaugut zur Einbaubohle verringert, was eben bei großen Schichtdicken besonders nachteilig ist, da für diese eine erhöhte Menge an Einbaugut benötigt wird.

Aus der EP 0 849 398 A1 ist ein Straßenfertiger bekannt, dessen hinterer Bereich zum Einbau großer Schichtdicken anhebbar ist. Dies wird durch eine mittels hydraulischer Stellzylinder höhenverstellbare Vertikalführung zwischen einem Raupenfahrwerk und einem Chassis des Straßenfertigers in dem hinteren Bereich des Straßenfertigers erreicht. In einem vorderen Bereich ist das Chassis drehbar an dem Raupenfahrwerk gelagert. Nachteilig an diesem System sind die hohen Belastungen auf die hydraulischen Stellzylinder, welche das Gewicht des angehobenen Chassis im Wesentlichen vollständig tragen. Hierdurch leidet auch die Stabilität des Straßenfertigers.

Weitere Straßenfertiger mit einem zumindest in einem hinteren Bereich anhebbaren Chassis sind aus der US 4,801,218 A, der JP 2008 106514 A, der DE 299 07 733 U1 und der US 3,901,616 A bekannt. Auch hier wirken hohe Kräfte auf hydraulische Stellzylinder, welche das Gewicht des Chassis im Wesentlichen vollständig tragen.

Aus dem Prospekt "CR600 SERIES PAVERS & MTV" von BOMAG ist unter der Bezeichnung "Frame Raise System" ein weiteres System zum Anheben des Chassis gegenüber dem Fahrwerk in einem hinteren Bereich eines Straßenfertigers bekannt. Bei diesem System ist eine große kreisrunde Scheibe in Einbaufahrtrichtung des Straßenfertigers vertikal ausgerichtet an dem Chassis angeordnet. Die Scheibe ist entlang ihres Umfangs drehbar an dem Chassis gelagert. Somit ist die Scheibe um eine durch ihren Mittelpunkt verlaufende, quer zur Einbaufahrtrichtung liegende Hauptdrehachse drehbar. Exzentrisch zu der Hauptdrehachse ist an einer äußeren Fläche der Scheibe eine um eine quer zur Einbaufahrtrichtung liegende Nebenachse drehbare Verbindung zu dem Fahrwerk des Straßenfertigers vorgesehen. Die Scheibe kann in ihrer Lagerung an dem Chassis mittels eines Hydraulikzylinders rotiert werden. Bei einem Rotieren der Scheibe verändert sich aufgrund der Exzentrizität der Verbindung zwischen der Scheibe und dem Fahrwerk die gegenseitige Höhenbeziehung zwischen dem Chassis und dem Fahrwerk in einem hinteren Bereich des Straßenfertigers. Obwohl bei diesem System das Gewicht des Chassis nicht mehr vollständig von dem Hydraulikzylinder getragen werden muss, sind von diesem dennoch hohe Kräfte zum Rotieren der Scheibe beim Anheben des Chassis aufzubringen. Auch beim Halten des Chassis in einer gewissen Höhenposition wirken hohe Belastungen auf den Hydraulikzylinder.

Die US 2015/102571 A1 beschreibt ein landwirtschaftliches Fahrzeug zum sprühenden Ausbringen von Flüssigkeiten auf Getreidefelder. Damit das Feld auch befahren werden kann, wenn das Getreide bereits höher ist, lässt sich das gesamte Chassis gleichmäßig anheben.

Es ist Aufgabe der Erfindung, einen Straßenfertiger mit einem gegenüber dem Fahrwerk in einem hinteren Bereich des Straßenfertigers anhebbaren Chassis bereitzustellen, bei dem die mechanische Belastung auf den entsprechenden Anhebemechanismus soweit möglich verringert wird und bei dem der Anhebemechanismus möglichst effizient einsetzbar ist.

Diese Aufgabe wird durch den Gegenstand von Anspruch 1 gelöst. Die abhängigen Ansprüche geben vorteilhafte Ausführungsformen der Erfindung an.

Ein erfindungsgemäßer Straßenfertiger umfasst ein Fahrwerk und ein von dem Fahrwerk getragenes Chassis. Ein erfindungsgemäßer Straßenfertiger kann ein als Kettenfahrwerk ausgebildetes Fahrwerk umfassen. Es wäre aber auch denkbar, die Erfindung auf einen Straßenfertiger mit Radfahrwerk anzuwenden. Bezüglich einer Einbaufahrtrichtung vorne am Straßenfertiger ist ein Gutbunker zur Aufnahme von Einbaugut an dem Chassis angebracht. Bezüglich der Einbaufahrtrichtung hinten am Straßenfertiger ist eine Einbaubohle zum Verdichten von Einbaugut mittels Zugholmen an dem Chassis angebracht, insbesondere angelenkt.

Der Straßenfertiger umfasst zudem eine Anhebeeinrichtung, die dazu ausgelegt ist, das Chassis gegenüber dem Fahrwerk zumindest in einem hinteren Bereich des Straßenfertigers anzuheben. Vorzugsweise erlaubt die Anhebeeinrichtung ein stufenloses Einstellen der Höhe des Chassis in Bezug auf das Fahrwerk. Es wäre aber auch denkbar, dass diskrete Relativlagen zwischen dem Chassis und dem Fahrwerk mittels der Anhebeeinrichtung einstellbar sind.

Der Straßenfertiger umfasst des Weiteren ein Verriegelungselement, das zwischen einem verriegelten Zustand und einem Freigabezustand verfahrbar ist. In dem verriegelten Zustand verriegelt das Verriegelungselement das Chassis in einer vordefinierten Transporthöhe gegenüber dem Fahrwerk auf mechanische Art und Weise. Wenn sich das Verriegelungselement in dem verriegelten Zustand befindet, ist ein weiteres Anheben des Chassis über die Transporthöhe hinaus oder ein Absenken des Chassis unter die Transporthöhe durch das Verriegelungselement mechanisch verhindert, wobei jedoch ein gewisses Spiel um die Transporthöhe herum möglich sein kann. In dem Freigabezustand des Verriegelungselements ist die mechanische Verriegelung des Chassis in der Transporthöhe aufgehoben. Der Straßenfertiger umfasst einen Verriegelungselement-Aktuator zum Verfahren des Verriegelungselements zwischen dem verriegelten Zustand und dem Freigabezustand. Vorzugsweise ist die Transporthöhe als eine Höheneinstellung des Chassis in einem Bereich zwischen einem maximal abgesenkten Zustand des Chassis und einem maximal angehobenen Zustand des Chassis vordefiniert. In diesem Fall kann das Chassis aus der Transporthöhe gegenüber dem Fahrwerk sowohl nach unten als auch nach oben verstellt werden, wenn sich das Verriegelungselement in dem Freigabezustand befindet. Die Transporthöhe kann als eine Höheneinstellung des Chassis vordefiniert sein, welche für einen Transport des Straßenfertigers zwischen Baustelleneinsätzen bevorzugt wird. Vorzugsweise ist das Chassis in der Transporthöhe zu einem gewissen Grad gegenüber dem Fahrwerk angehoben, aber auch nicht zu stark angehoben, damit der Straßenfertiger während einer Transportfahrt möglichst kompakt vorliegt. Vorzugsweise überschreitet eine Gesamthöhe des Straßenfertigers eine Höhe von drei Metern, von 3,1 Metern oder vier Metern nicht, wenn das Chassis in der Transporthöhe vorliegt. Hierbei kann ein Dach eines Hauptbedienstands des Straßenfertigers abgeklappt oder nicht abgeklappt vorliegen.

Durch die mechanische Verriegelung des Chassis gegenüber dem Fahrwerk in der Transporthöhe wird die Anhebeeinrichtung entlastet. Eine mechanische Verriegelung des Chassis in seiner Höhenposition ist insbesondere bei einer Transportfahrt des Straßenfertigers zwischen Baustelleneinsätzen zweckmäßig, da während einer solchen Transportfahrt die Anhebeeinrichtung nicht betätigt werden muss. Zudem treten bei Transportfahrten vermehrt höhere Geschwindigkeiten und Erschütterungen auf, sodass hier eine besondere Belastung herrscht. Die mechanische Verriegelung durch das Verriegelungselement wirkt zudem als zusätzliche Sicherung gegen ein Absacken des Chassis.

Der Straßenfertiger kann des Weiteren eine Steuereinrichtung umfassen, welche zum Ansteuern der Anhebeeinrichtung zum wahlweisen Anheben oder Absenken des Chassis gegenüber dem Fahrwerk und zum Ansteuern des Verriegelungselement-Aktuators zum Verfahren des Verriegelungselements zwischen dem verriegelten Zustand und dem Freigabezustand konfiguriert ist. Vorzugsweise steuert die Steuereinrichtung auch weitere Funktionen des Straßenfertigers. Beispielsweise kann die Steuereinrichtung zum Ansteuern eines Fahrantriebsaggregats für die Fahrfunktion des Straßenfertigers konfiguriert sein. Auch eine Steuerung von Funktionen der Einbaubohle kann mittels der Steuereinrichtung erfolgen. Die Steuereinrichtung kann als ein zentrales Element im Straßenfertiger vorgesehen sein. Es ist aber auch denkbar, dass einzelne Komponenten der Steuereinrichtung über den Straßenfertiger verteilt vorliegen.

Der Straßenfertiger kann zudem eine Moduswahl-Eingabeeinrichtung umfassen, mittels welcher ein Benutzer aus einem von mehreren Betriebsmodi auswählen kann. Die Steuereinrichtung kann dazu konfiguriert sein, abhängig von dem jeweils ausgewählten Betriebsmodus die Anhebeeinrichtung und den Verriegelungselement-Aktuator gemäß unterschiedlicher Steuerschemata anzusteuern. So wird erreicht, dass die Anhebeeinrichtung und der Verriegelungselement-Aktuator passend zur jeweiligen Betriebssituation des Straßenfertigers betrieben werden, ohne dass sich der Benutzer im Detail darum kümmern muss. So kann der Betrieb des Straßenfertigers optimiert werden und Bedienungsfehler können verhindert werden.

Mittels der Moduswahl-Eingabeeinrichtung kann ein Umsetz-Betriebsmodus auswählbar sein. Die Steuereinrichtung kann dazu konfiguriert sein, das Chassis automatisch durch Ansteuern der Anhebeeinrichtung in die Transporthöhe zu bringen, wenn der Umsetz-Betriebsmodus ausgewählt wird, und nach dem Verbringen des Chassis in die Transporthöhe den Verriegelungselement-Aktuator zum Verfahren des Verriegelungselements in die verriegelte Position anzusteuern. Die Steuereinrichtung kann zudem dazu konfiguriert sein, in dem Umsetz-Betriebsmodus sowohl eine Vorwärtsfahrt als auch eine Rückwärtsfahrt des Straßenfertigers zu erlauben. Durch Auswählen des Umsetz-Betriebsmodus lässt sich der Straßenfertiger leicht in einen zum Transport zwischen Baustellen geeigneten Zustand bringen.

Vorzugsweise ist die Steuereinrichtung dazu konfiguriert, in dem Umsetz-Betriebsmodus eine Fahrgeschwindigkeit des Straßenfertigers auf einen vorbestimmten Maximalwert, welcher beispielsweise 25 m/min oder weniger als 25 m/min beträgt, zu beschränken, bis das Chassis in der Transporthöhe verriegelt ist, und erst nach dem Verriegeln höhere Fahrgeschwindigkeiten freizugeben. So wird verhindert, dass bei höheren Geschwindigkeiten mögliche Belastungen auf die Anhebeeinrichtung wirken. Nach der Verriegelung des Chassis in der Transportposition werden die höheren Geschwindigkeiten dann freigegeben, um den Straßenfertiger zügig umsetzen zu können.

Mittels der Moduswahl-Eingabeeinrichtung kann ein Ansetz-Betriebsmodus auswählbar sein. Die Steuereinrichtung kann dazu konfiguriert sein, das Verriegelungselement automatisch in den Freigabezustand zu verbringen, wenn der Ansetz-Betriebsmodus ausgewählt wird. Befindet sich bei Auswahl des Ansetz-Betriebsmodus das Verriegelungselement bereits in dem Freigabezustand, ist dieser Schritt selbstverständlich nicht erforderlich. Die Steuereinrichtung kann dazu konfiguriert sein, in dem Ansetz-Betriebsmodus eine Höhenverstellung des Chassis durch Ansteuern der Anhebeeinrichtung durchzuführen. Hierbei kann die Steuereinrichtung die Höhenverstellung des Chassis beispielsweise basierend auf Benutzereingaben durchführen. Die jeweils gewünschten Höhenpositionen des Chassis gegenüber dem Fahrwerk können hierzu von einem Benutzer beispielsweise direkt eingegeben werden oder es kann eine gewünschte Veränderung gegenüber einem derzeit vorliegenden Zustand eingegeben werden. Alternativ wäre es denkbar, dass die Steuereinrichtung in dem Ansetz-Betriebsmodus die Höhenverstellung des Chassis basierend auf einem automatischen Ansetzprogramm durchführt. Dies kann insbesondere vollkommen ohne die Notwendigkeit von Benutzereingaben geschehen. Es sind auch Mischformen denkbar, bei denen die Steuereinrichtung die Anhebeeinrichtung grundsätzlich basierend auf einem automatischen Ansetzprogramm ansteuert, aber ein Eingreifen durch Benutzereingaben möglich ist. Die Steuereinrichtung kann zudem dazu konfiguriert sein, in dem Umsetz-Betriebsmodus sowohl eine Vorwärtsfahrt als auch eine Rückwärtsfahrt des Straßenfertigers zu erlauben. Der Ansetz-Betriebsmodus ist besonders gut für das Verbringen des Straßenfertigers in eine Startkonfiguration direkt vor Einbaubeginn geeignet.

Mittels der Moduswahl-Eingabeeinrichtung kann ein Einbau-Betriebsmodus auswählbar sein. Die Steuereinrichtung kann dazu konfiguriert sein, das Verriegelungselement automatisch in den Freigabezustand zu verbringen, wenn der Einbau-Betriebsmodus ausgewählt wird. Befindet sich bei Auswahl des Einbau-Betriebsmodus das Verriegelungselement bereits in der Freigabestellung, ist dieser Schritt selbstverständlich nicht erforderlich. Die Steuereinrichtung kann dazu konfiguriert sein, in dem Einbau-Betriebsmodus eine Höhenverstellung des Chassis durch Ansteuern der Anhebeeinrichtung durchzuführen. Hierbei kann die Steuereinrichtung die Anhebeeinrichtung beispielsweise basierend auf Benutzereingaben ansteuern, insbesondere basierend auf Benutzereingaben, welche eine gewünschte Höhenposition des Chassis gegenüber dem Fahrwerk oder einer Veränderung gegenüber einer aktuell vorliegenden Höhenposition des Chassis angeben. Alternativ wäre es aber auch denkbar, dass die Steuereinrichtung die Anhebeeinrichtung in dem Einbau-Betriebsmodus basierend auf einem automatischen Einbauprogramm ansteuert. Beispielsweise könnte eine Chassishöhe mittels eines Steuer- oder Regelverfahrens während des Einbaus permanent an eine aktuell einzubauende Fahrbahndicke angepasst werden. Es sind aber auch Mischformen denkbar, beispielsweise derart, dass die Ansteuerung prinzipiell basierend auf einem automatischen Einbauprogramm erfolgt, aber auch ein Eingriff durch Benutzereingaben möglich ist. Der Einbau-Betriebsmodus eignet sich besonders zur Verwendung während eines Einbauvorgangs.

Vorzugsweise ist die Steuereinrichtung dazu konfiguriert, in dem Einbau-Betriebsmodus eine Vorwärtsfahrt des Straßenfertigers zu erlauben und eine Rückwärtsfahrt des Straßenfertigers zu unterbinden. Hierdurch wird verhindert, dass durch ein versehentliches Zurücksetzen mit dem Straßenfertiger während der Einbaufahrt ein Defekt in der eingebauten Fahrbahnstrecke entsteht.

Vorzugsweise ist die Steuereinrichtung dazu konfiguriert, die Chassishöhe in dem Ansetz-Betriebsmodus mit einer höheren Verstellgeschwindigkeit zu verstellen als in dem Einbau-Betriebsmodus. So wird in dem Ansetz-Betriebsmodus ein schnelles Verbringen des Chassis in die gewünschte Startposition erreicht. In dem Einbau-Betriebsmodus dagegen wird die Chassishöhe nur langsam verändert, um die Einbauqualität während des laufenden Einbaus nicht zu gefährden.

Mittels der Moduswahl-Eingabeeinrichtung kann ein Neutral-Betriebsmodus auswählbar sein. Die Steuereinrichtung kann dazu konfiguriert sein, in dem Neutral-Betriebsmodus ein Verstellen der Chassishöhe mittels der Anhebeeinrichtung zu unterbinden. Der Neutral-Betriebsmodus kann beispielsweise in Einbaupausen genutzt werden, wenn lediglich eine Heizfunktion des Straßenfertigers benötigt wird. Um in solchen Situationen ein versehentliches Verstellen der Höhenposition des Chassis, welches einen Verlust der aktuellen Einstellung zur Folge hätte, zu verhindern, ist die Möglichkeit der Höhenverstellung in dem Neutral-Betriebsmodus deaktiviert.

Gemäß einer vorteilhaften Ausführungsform kann mittels der Moduswahl-Eingabeeinrichtung eine Auswahl aus dem Umsetz-Betriebsmodus, dem Ansetz-Betriebsmodus, dem Einbau-Betriebsmodus und dem Neutral-Betriebsmodus getroffen werden. Es wäre aber auch denkbar, dass weitere auswählbare Betriebsmodi vorgesehen sind und/oder einer oder mehrere der Betriebsmodi nicht vorhanden sind.

Vorzugsweise umfasst der Straßenfertiger zudem eine Anzeigeeinrichtung, wobei die Steuereinrichtung dazu ausgelegt ist, die Anzeigeeinrichtung zum Anzeigen eines aktuellen Anhebezustands des Chassis gegenüber dem Fahrwerk anzusteuern. So kann ein Bediener jederzeit den aktuellen Einstellzustand des Chassis erkennen und darauf basierend den Straßenfertiger steuern.

Die Anhebeeinrichtung kann eine Wippe umfassen, die um eine Fahrwerk-Drehachse drehbar an einer fahrwerkseitigen Lagerfläche (eine Lagerfläche, die Teil des Fahrwerks ist oder zumindest fest mit dem Fahrwerk verbunden ist) gelagert ist. Des Weiteren ist die Wippe um eine Chassis-Drehachse drehbar an einer chassisseitigen Lagerfläche (eine Lagerfläche, die Teil des Chassis ist oder zumindest fest mit dem Chassis verbunden ist) gelagert. Vorzugsweise sind die Fahrwerk-Drehachse und die Chassis-Drehachse zueinander parallel und verlaufen insbesondere jeweils in einer horizontalen Ebene und senkrecht zur Einbaufahrtrichtung, also in eine Querrichtung des Straßenfertigers. Insbesondere sind die Fahrwerk-Drehachse und die Chassis-Drehachse nicht identisch. Bevorzugterweise sind die Fahrwerk-Drehachse und die Chassis-Drehachse parallel zueinander versetzt.

Die Anhebeeinrichtung kann zudem ein längenveränderliches Einstellelement umfassen. Das längenveränderliche Einstellelement verbindet einen chassisseitigen Anlenkpunkt (einen Anlenkpunkt, der Teil des Chassis ist oder zumindest fest mit dem Chassis verbunden ist) mit einem wippenseitigen Anlenkpunkt (einem Anlenkpunkt, der Teil der Wippe ist oder zumindest fest mit der Wippe verbunden ist). Insbesondere ist das längenveränderliche Einstellelement jeweils gelenkig mit dem chassisseitigen Anlenkpunkt und dem wippenseitigen Anlenkpunkt verbunden. Vorzugsweise ist ein erstes Ende des längenveränderlichen Einstellelements gelenkig mit dem chassisseitigen Anlenkpunkt verbunden und ein zweites Ende des längenveränderlichen Einstellelements gelenkig mit dem wippenseitigen Anlenkpunkt verbunden. Es ist aber auch denkbar, dass sich das längenveränderliche Einstellelement einseitig oder beidseitig über den jeweiligen Anlenkpunkt hinaus erstreckt. Das längenveränderliche Einstellelement ist dazu konfiguriert, durch Verändern seiner Länge einen Abstand zwischen dem chassisseitigen Anlenkpunkt und dem wippenseitigen Anlenkpunkt zu verändern und so das Chassis gegenüber dem Fahrwerk wahlweise anzuheben oder abzusenken.

Vorzugsweise ist ein minimaler Abstand zwischen der Chassis-Drehachse und der Fahrwerk-Drehachse größer als ein Abstand zwischen der Chassis-Drehachse und der chassisseitigen Lagerfläche. Dies kann heißen, dass die Fahrwerk-Drehachse außerhalb der Lagerung der Wippe an dem Chassis liegt. Hierdurch kann eine verbesserte Kraftübertragung beim Anheben oder Halten des Chassis erreicht werden. Zudem kann die Anhebeeinrichtung so kompakt ausgebildet werden.

Vorzugsweise ist das längenveränderliche Einstellelement dazu konfiguriert, durch Verändern seiner Länge die Lage der Wippe in Bezug auf das Fahrwerk oder das Chassis zu verändern.

Das längenveränderliche Einstellelement erstreckt sich vorzugsweise zumindest im Wesentlichen entlang einer horizontalen Richtung. Somit wird das zumindest im Wesentlichen entlang einer vertikalen Richtung wirkende Gewicht des Chassis zumindest teilweise von der Wippe bzw. der chassisseitigen und der fahrwerkseitigen Lägerfläche aufgenommen und muss nicht vollständig von dem längenveränderlichen Einstellelement getragen werden. Dies trägt zur Stabilität der gesamten Anordnung bei. Dass sich das längenveränderliche Einstellelement zumindest im Wesentlichen entlang einer horizontalen Richtung erstreckt, kann bedeuten, dass eine horizontale Komponente der Erstreckungsrichtung des längenveränderlichen Einstellelements größer ist als eine vertikale Komponente der Erstreckungsrichtung des längenveränderlichen Einstellelements, und/oder dass ein Neigungswinkel zwischen dem längenveränderlichen Einstellelement und einer horizontalen Ebene 10°, 15°, 25° oder 45° nicht übersteigt.

Bevorzugt liegt der chassisseitige Anlenkpunkt zumindest in einigen Betriebsstellungen bezüglich der Einbaufahrtrichtung vor oder hinter der Chassis-Drehachse und/oder der Fahrwerk-Drehachse. So kann aufgrund einer Hebelwirkung eine gute Kraftübertragung erreicht werden.

An dem Chassis kann ein unterer Anschlag vorgesehen sein, welcher dazu konfiguriert ist, in einem maximal abgesenkten Zustand des Chassis das Chassis durch Eingriff mit der Wippe gegen ein weiteres Absenken zu sichern. So wird das längenveränderliche Einstellelement in dem maximal abgesenkten Zustand des Chassis entlastet. Zudem ist der maximal abgesenkte Zustand des Chassis durch den Anschlag fest definiert. Der untere Anschlag dient auch als Sicherung bei einer Fehlfunktion der Anhebeeinrichtung.

An dem Chassis kann ein oberer Anschlag vorgesehen sein, welcher dazu konfiguriert sein kann, in einem maximal angehobenen Zustand des Chassis das Chassis durch Eingriff mit der Wippe gegen ein weiteres Anheben zu sichern. Alternativ oder zusätzlich kann der oberere Anschlag auch als Sicherung gegen ein Überdrehen (Durchschwingen) der Anhebeeinrichtung dienen.

Bei dem längenveränderlichen Einstellelement kann es sich um einen Hydraulikzylinder handeln. Ein Hydraulikzylinder lässt sich gut in eine üblicherweise an einem Straßenfertiger ohnehin vorgesehene Hydraulik integrieren und erlaubt das Übertragen großer Kräfte. Alternativ könnte es sich bei dem längenveränderlichen Einstellelement auch um einen Spindeltrieb handeln. Damit könnte eine rein mechanische Lösung erreicht werden.

Das Verriegelungselement kann ein an dem Chassis vorgesehener Verriegelungsbolzen sein, welcher zum verriegelnden Eingriff mit einer Verriegelungsstruktur, beispielsweise einer Öffnung oder einer Vertiefung, der Wippe ausfahrbar ist. Insbesondere kann das Verriegelungselement horizontal, insbesondere senkrecht zur Einbaufahrtrichtung, ausfahrbar sein.

Das Chassis kann im vorderen Bereich des Straßenfertigers schwenkbar an dem Fahrwerk angebracht sein, so dass bei einem entlang der Einbaufahrtrichtung asymmetrischen Anheben des Chassis keine Spannungen zwischen Chassis und Fahrwerk auftreten.

Zum Vermeiden von Spannungen kann das Chassis in einem vorderen Bereich des Straßenfertigers bezüglich der Einbaufahrtrichtung längsverschiebbar an dem Fahrwerk angebracht sein.

Vorzugsweise umfasst der Straßenfertiger eine Verteilerschnecke zum Verteilen von Einbaugut vor der Einbaubohle quer zur Einbaufahrtrichtung. Der Straßenfertiger kann des Weiteren eine Fördereinrichtung zum Fördern von Einbaugut von dem Gutbunker zu der Verteilerschnecke umfassen. Die Verteilerschnecke kann in einer unveränderlichen Relativlage zum Chassis fest an dem Chassis angebracht sein. Da das Chassis insgesamt gegenüber dem Fahrwerk anhebbar ist, kann auf eine Höhenverstellbarkeit der Verteilerschnecke in Bezug auf das Chassis verzichtet werden und so eine größere Stabilität erreicht werden. Beim Anheben des Chassis mit der daran angebrachten Verteilerschnecke als Ganzes wird die gegenseitige räumliche Beziehung zwischen Verteilerschnecke und einem Materialauslass der Fördereinrichtung nicht verändert. Es kommt zu keiner Blockierung des Materialauslasses beim Anheben des Chassis zum Erreichen großer Einbaustärken.

Im Folgenden soll die Erfindung anhand eines Ausführungsbeispiels unter Bezugnahme auf die Figuren näher erläutert werden. Dabei zeigen
- Figur 1: eine schematische Seitenansicht eines Straßenfertigers gemäß einer Ausführungsform;
- Figur 2: eine schematische Perspektivansicht des Chassis und des Fahrwerks des Straßenfertigers gemäß der Ausführungsform;
- Figur 3A: eine schematische Perspektivansicht auf die Anhebeeinrichtung des Straßenfertigers gemäß der Ausführungsform, wobei das Verriegelungselement in dem Freigabezustand gezeigt ist;
- Figur 3B: eine schematische Perspektivansicht auf die Anhebeeinrichtung des Straßenfertigers gemäß der Ausführungsform, wobei das Verriegelungselement in dem verriegelten Zustand gezeigt ist;
- Figur 4A: eine schematische Seitenansicht auf das Fahrwerk und das Chassis des Straßenfertigers gemäß der Ausführungsform in einer maximal abgesenkten Position des Chassis;
- Figur 4B: eine schematische Seitenansicht auf das Fahrwerk und das Chassis des Straßenfertigers gemäß der Ausführungsform in einer maximal angehobenen Position des Chassis;
- Figur 5: eine schematische Perspektivansicht auf einen in Fahrtrichtung vorne an dem Straßenfertiger gemäß der Ausführungsform gelegenen rechten Verbindungsbereich zwischen Fahrwerk und Chassis; und
- Figur 6: ein schematisches Blockdiagramm zur Illustration der Funktion der Steuereinrichtung des Straßenfertigers gemäß der Ausführungsform.

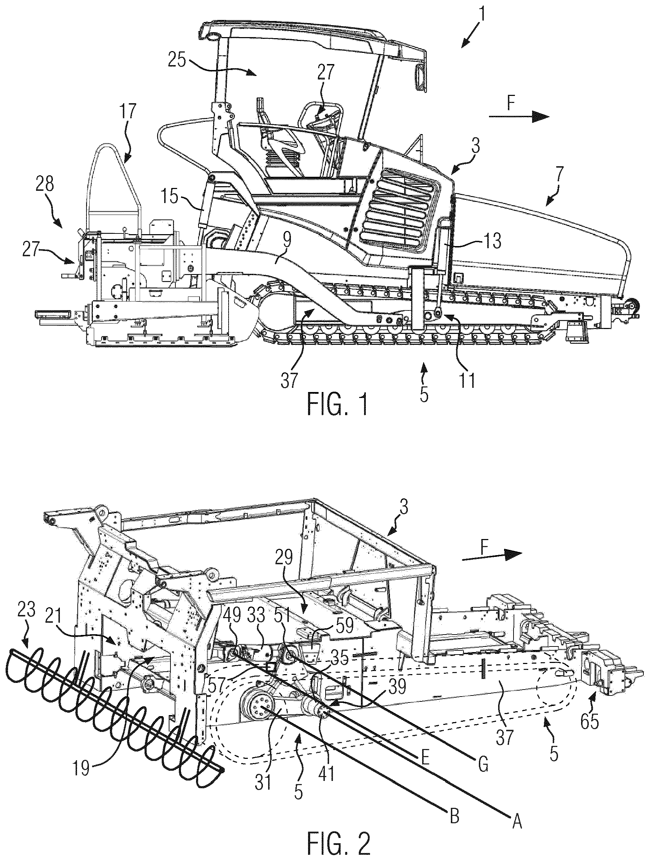

Fig. 1 zeigt in schematischer Seitenansicht einen erfindungsgemäßen Straßenfertiger 1 gemäß einer Ausführungsform. Der Straßenfertiger 1 umfasst ein Chassis 3 sowie ein Fahrwerk 5, im vorliegenden Fall ein Kettenfahrwerk. In Einbaufahrtrichtung F vorne ist an dem Chassis 3 ein Gutbunker 7 zur Aufnahme von Einbaugut angebracht. Auf bezüglich der Einbaufahrtrichtrung F beiden lateralen Seiten des Straßenfertigers 1 ist jeweils ein Zugarm 9 über einen höhenverstellbaren Anlenkpunkt 11 an dem Chassis 3 gehalten. Der Anlenkpunkt 11 ist mittels eines Anlenk-Hydraulikzylinders 13 an dem Straßenfertiger 1 höhenverstellbar. An einer Hinterseite des Straßenfertigers 1 sind die Zugarme 9 jeweils wieder beidseitig über höhenverstellbare hintere Hydraulikzylinder 15 am Chassis 3 angebracht. An dem bezüglich der Einbaufahrtrichtung F hinteren Ende der Zugarme 9 ist eine Einbaubohle 17 zum Verdichten von Einbaugut aufgehängt. Während des Einbaus wird die Einbaubohle 17 von den Zugarmen 9 auf dem Einbaugut schwimmend hinter dem Straßenfertiger 1 hergezogen. Im Chassis 3 ist eine Fördereinrichtung 19 zum Fördern von Einbaugut von dem Gutbunker 7 in einen hinteren Bereich des Straßenfertigers 1 vorgesehen. Im hinteren Bereich des Straßenfertigers 1 verlässt das Einbaugut die Fördereinrichtung 19 durch einen Materialauslass 21 und gelangt zu einer fest am Chassis 3 angebrachten Verteilerschnecke 23 zum Verteilen von Einbaugut vor der Einbaubohle 17 quer zur Einbaufahrtrichtung F. Die Verteilerschnecke 23 sowie der Materialauslass 21 sind in Fig. 1 verdeckt, aber in Fig. 2 dargestellt. An dem Chassis 3 des Straßenfertigers 1 ist ein Hauptbedienstand 25 vorgesehen, welcher Platz für eine Bedienperson bietet und eine Eingabeeinrichtung 27 zum Tätigen von Eingaben zum Steuern des Straßenfertigers 1 umfasst. Der Straßenfertiger 1 umfasst zudem einen an der Einbaubohle 17 vorgesehenen Außenbedienstand 28, welcher ebenfalls eine Eingabeeinrichtung 27 zum Tätigen von Eingaben zum Steuern des Straßenfertigers 1 umfasst.

Fig. 2 zeigt eine schematische Seitenansicht des Fahrwerks 5 und des Chassis 3 des Straßenfertigers 1, wobei aus Gründen der Übersichtlichkeit diverse Aufbauten, Komponenten und Verkleidungen nicht dargestellt sind. In einem bezüglich der Einbaufahrtrichtung F hinteren Bereich des Chassis 3 ist eine Anhebeeinrichtung 29 zum Anheben des Chassis 3 gegenüber dem Fahrwerk 5 im hinteren Bereich des Straßenfertigers 1 vorgesehen. Die Anhebeeinrichtung 29 umfasst auf beiden lateralen Seiten des Straßenfertigers 1 jeweils eine Wippe 31 sowie ein längenveränderliches Einstellelement 33. Im Folgenden werden der Aufbau und die Funktionsweise der Anhebeeinrichtung 29 nur für eine Seite des Straßenfertigers 1 beschrieben. Die gegenüberliegende Seite kann analog ausgebildet sein.

Die Wippe 31 ist um eine Fahrwerk-Drehachse A drehbar an einer fahrwerkseitigen Lagerfläche 35 gelagert. Wie in Fig. 2 gezeigt, umfasst hierzu ein Raupenträger 37 des Fahrwerks 5 eine zylindrische Ausnehmung 39, deren innere Wand die fahrwerkseitige Lagerfläche 35 bildet. In der Ausnehmung 39 ist ein sich entlang der Fahrwerk-Drehachse A erstreckender zylindrischer Fortsatz 41 der Wippe 31 drehbar aufgenommen. Alternativ wäre es aber auch denkbar, dass eine entsprechende Ausnehmung in der Wippe 31 vorgesehen ist und ein zylindrischer Fortsatz des Raupenträgers 37 um die Fahrwerk-Drehachse A drehbar darin aufgenommen ist. In diesem Fall wäre die fahrwerkseitige Lagerfläche 35 durch die Umfangsfläche des Fortsatzes gebildet.

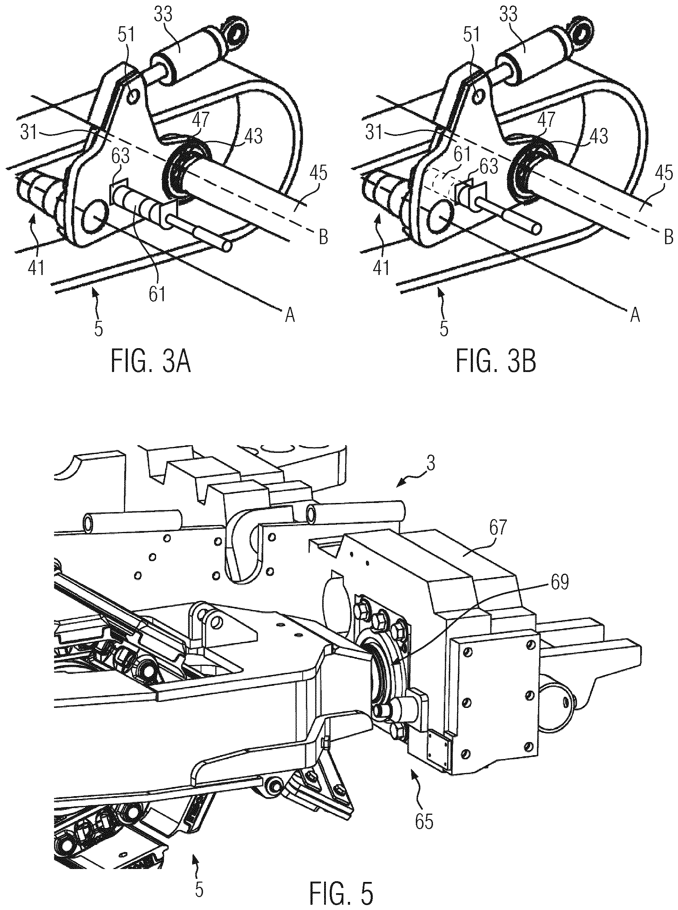

Die Wippe 31 ist des Weiteren um eine Chassis-Drehachse B drehbar an einer chassisseitigen Lagerfläche 43 gelagert. Wie anhand der in Fig. 3A und Fig. 3B dargestellten schematischen Sicht auf die in Fig. 2 nicht sichtbare Innenfläche der Wippe 31 ersichtlich, ist hierzu ein fest an dem Chassis 3 angebrachtes zylindrisches Element 45 in einer korrespondierenden Ausnehmung 47 der Wippe 31 um die Chassis-Drehachse B drehbar aufgenommen. Die chassisseitige Lagerfläche 43 wird durch einen Außenumfang des zylindrischen Elements 45 bereitgestellt. Alternativ wäre es auch denkbar, dass ein Fortsatz der Wippe 31 in einer entsprechenden Ausnehmung eines chassisfesten Elements um die Chassis-Drehachse B drehbar aufgenommen ist. In diesem Fall würde eine innere Umfangsfläche der Ausnehmung die chassisseitige Lagerfläche 43 bereitstellen.

Die Fahrwerk-Drehachse A und die Chassis-Drehachse B sind zueinander parallel und verlaufen in einer zu der Einbaufahrtrichtung F senkrecht stehenden Querrichtung.

Wie in Fig. 2 dargestellt, ist ein erstes Ende des längenveränderlichen Einstellelements 33 um eine Drehachse E drehbar mit einem chassisseitigen Anlenkpunkt 49 verbunden. Ein zweites Ende des längenveränderlichen Einstellelements 33 ist um eine Drehachse G drehbar mit einem wippenseitigen Anlenkpunkt 51 verbunden. Somit verbindet das längenveränderliche Einstellelement 33 den chassisseitigen Anlenkpunkt 49 mit dem wippenseitigen Anlenkpunkt 51. Die Drehachse E und die Drehachse G sind zueinander sowie zu der Fahrwerk-Drehachse A und der Chassis-Drehachse B parallel und verlaufen in einer zu der Einbaufahrtrichtung F senkrecht stehenden Querrichtung.

In der gezeigten Ausführungsform handelt es sich bei dem längenveränderlichen Einstellelement 33 um einen Hydraulikzylinder. Es wäre aber auch das Vorsehen eines anderen längenveränderlichen Einstellelements 33 denkbar, wie beispielsweise eines Spindeltriebs. Das längenveränderliche Einstellelement 33 ist mittels eines Einstellelement-Aktuators 53 zum insbesondere stufenlosen Verändern seiner Länge betätigbar. Durch ein Verändern der Länge des längenveränderlichen Einstellelements 33 mittels des Einstellelement-Aktuators 53 wird ein Abstand zwischen dem chassisseitigen Anlenkpunkt 49 und dem wippenseitigen Anlenkpunkt 51 verändert. Hierdurch wird die Lage der Wippe 31 in Bezug auf das Fahrwerk 5 und das Chassis 3 verändert und so das Chassis 3 gegenüber dem Fahrwerk 5 wahlweise angehoben oder abgesenkt.

Das längenveränderliche Einstellelement 33 erstreckt sich zumindest im Wesentlichen entlang einer horizontalen Richtung. In der gezeigten Ausführungsform liegt der chassisseitige Anlenkpunkt 49 bezüglich der Einbaufahrtrichtung F hinter der Chassis-Drehachse B und der Fahrwerk-Drehachse A. Es wäre aber auch denkbar, dass der chassisseitige Anlenkpunkt 49 bezüglich der Einbaufahrtrichtung F vor der Chassis-Drehachse B und/oder der Fahrwerk-Drehachse A liegt.

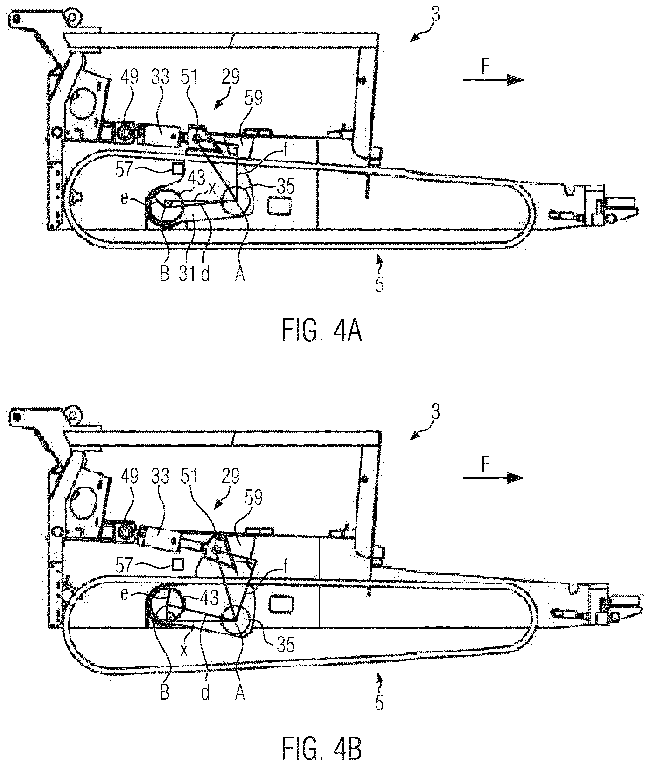

In Fig. 4A ist das Chassis 3 in einer gegenüber dem Fahrwerk 5 maximal abgesenkten Position dargestellt. In der gezeigten Ausführungsform entspricht dies einer minimalen Länge des längenveränderlichen Einstellelements 33. In der maximal abgesenkten Position des Chassis 3 ist das Chassis 3 gegen ein weiteren Absenken durch einen Eingriff der Wippe 31 mit einem am Chassis 3 vorgesehenen unteren Anschlag 57 abgesichert. Wird aus dem in Fig. 4A gezeigten Zustand heraus die Länge des längenveränderlichen Einstellelements 33 mittels des Einstellelement-Aktuators 53 erhöht, vergrößert sich der Abstand zwischen dem chassisseitigen Anlenkpunkt 49 und dem wippenseitigen Anlenkpunkt 51. Hierbei wird die Wippe 31 in der in Fig. 4A gezeigten Ansicht im Uhrzeigersinn um die Fahrwerk-Drehachse A gedreht, welche in die Zeichenebene hinein mittig durch den Fortsatz 41 der Wippe 31 geht. Hierdurch wird aufgrund der um die Chassis-Drehachse B drehbaren Lagerung der Wippe 31 an der chassisseitigen Lagerfläche 43 das Chassis 3 angehoben.

Bei fortgesetztem Verlängern der Länge des längenveränderlichen Einstellelements 33 wird schließlich der in Fig. 4B gezeigte Zustand erreicht. Fig. 4B zeigt einen maximal angehobenen Zustand des Chassis 3 gegenüber dem Fahrwerk 5. In diesem Zustand kommt die Wippe 31 mit einem am Chassis 3 vorgesehenen oberen Anschlag 59 in Eingriff, welcher ein weiteres Verlängern der Länge des längenveränderlichen Einstellelements 33 und damit ein weiteres Verschwenken der Wippe 31 um die Fahrwerk-Drehachse A verhindert. Es wäre alternativ aber auch denkbar, dass das längenveränderliche Einstellelement 33 maximal ausgefahren ist, bevor die Wippe 31 mit dem oberen Anschlag 59 in Eingriff kommt. Der obere Anschlag 59 könnte in einer solchen Version als Sicherung gegen ein Überdrehen (Durchschwingen) der Anhebeeinrichtung 29 dienen.

Durch ein erneutes Verringern der Länge des längenveränderlichen Einstellelements 33 kann das Chassis 3 aus der in Fig. 4B gezeigten Position heraus wieder abgesenkt werden. Vorzugsweise ist das Chassis 3 zwischen dem minimal angehobenen Zustand und dem maximal angehobenen Zustand durch geeignetes Einstellen des längenveränderlichen Einstellelements 33 stufenlos in der Höhe verstellbar. Es wäre aber auch das Vorsehen mehrerer diskreter Einstellmöglichkeiten denkbar.

Wie in Fig. 3A und Fig. 3B dargestellt, ist in der gezeigten Ausführungsform ein als Verriegelungsbolzen ausgebildetes Verriegelungselement 61 zum mechanischen Verriegeln der Wippe 31 in einer definierten Relativlage in Bezug auf das Chassis 3 vorgesehen. Das Verriegelungselement 61 ist an dem Chassis 3 vorgesehen und in einer horizontalen Ebene senkrecht zur Einbaufahrtrichtung F mittels eines Verriegelungselement-Aktuators 62 seitlich ausfahrbar, um in einer ausgefahrenen Stellung mit einer Verriegelungsstruktur 63 der Wippe 31 in Eingriff zu kommen. In der gezeigten Ausführungsform ist die Verriegelungsstruktur 63 der Wippe 31 als Ausnehmung ausgebildet. Insbesondere kann die Verriegelungsstruktur 63 als Ausnehmung in einer der Form des Verriegelungselements 61 entsprechenden Form ausgebildet sein. Es wäre auch denkbar, die Verriegelungsstruktur 63 in Form eines Langlochs auszubilden, um die Treffsicherheit beim Verriegeln zu erhöhen. Durch einen verriegelnden Eingriff des Verriegelungselements 61 mit der Verriegelungsstruktur 63 der Wippe 31 wird die Wippe 31 gegen ein Verändern ihrer Relativlage in Bezug auf das Chassis 3 und das Fahrwerk 5 festgelegt. So kann das Chassis 3 in einer vordefinierten Transporthöhe in Bezug auf das Fahrwerk 5 mechanisch gesichert werden. Dieser Zustand eignet sich besonders zum Transport des Straßenfertigers 1 zwischen Baustellen. Wenn sich das Chassis 3 in der Transporthöhe befindet, überschreitet vorzugsweise eine Maximalhöhe des Straßenfertigers 1 eine Höhe von 4 m, 3,1 m oder 3 m nicht. Hierbei kann ein Dach des Hauptbedienstands 25 abgeklappt oder nicht abgeklappt sein.

Fig. 3A zeigt das Verriegelungselement 61 in dem Freigabezustand, es in dem keine mechanische Verrieglung des Chassis 3 gegenüber dem Fahrwerk 5 bewirkt. Fig. 3B zeigt das Verriegelungselement 61 in dem verriegelten Zustand, in dem es das Chassis 3 in der Transporthöhe gegenüber dem Fahrwerk 5 mechanisch verriegelt.

Wie unter Anderem in den Fig. 4A und 4B erkennbar, ist ein Abstand d zwischen der Chassis-Drehachse B und der Fahrwerk-Drehachse A größer als ein Abstand e zwischen der Chassis-Drehachse B und der chassisseitigen Lagerfläche 43. Die Fahrwerk-Drehachse A liegt also außerhalb der Lagerung der Wippe 31 an dem Chassis 3. Hierdurch wird eine verbesserte Kraftübertragung beim Anheben des Chassis 3 erreicht. Zudem kann die Anhebeeinrichtung 29 ersichtlicherweise kompakt ausgebildet werden.

In den Fig. 4A und 4B ist der Betrag f des senkrecht auf der Längserstreckungsrichtung des längenveränderlichen Einstellelements 33 stehenden Anteils des Verbindungsvektors zwischen dem wippenseitigen Anlenkpunkt 51 und der Fahrwerk-Drehachse A schematisch konstruiert dargestellt. Zudem ist der Betrag x des sich in einer horizontalen Richtung erstreckenden Anteils des Verbindungsvektors zwischen der Fahrwerk-Drehachse A und der Chassis-Drehachse B schematisch konstruiert dargestellt. Vorzugsweise ist das Verhältnis dieser Beträge, als f/x größer als 0,5, als 0,7, als 1, als 1,3, als 1,5 oder als 2. So wird aufgrund einer Hebelwirkung eine besonders gute Kraftübertragung beim Anheben oder Halten des Chassis 3 durch das längenveränderliche Einstellelement 33 erreicht.

In der gezeigten Ausführungsform ist das Chassis 3 in einem bezüglich der Einbaufahrtrichtung F vorderen Bereich des Straßenfertigers 1 schwenkbar und bezüglich der Einbaufahrtrichtung F längsverschiebbar an dem Fahrwerk 5 angebracht. So kann das Chassis 3 in dem hinteren Bereich des Straßenfertigers 1 gegenüber dem Fahrwerk 5 angehoben oder abgesenkt werden, ohne im vorderen Bereich des Straßenfertigers 1 Spannungen zu erzeugen. Es ist ein asymmetrisches Anheben des Chassis 3 derart möglich, dass das Chassis 3 in dem hinteren Bereich des Straßenfertigers 1 weiter angehoben wird als in dem vorderen Bereich des Straßenfertigers 1. Fig. 5 zeigt in schematischer Seitenansicht ausschnittsweise einen auf der rechten Seite des Straßenfertigers 1 gelegenen Anbringungsbereich 65 zwischen dem Fahrwerk 5 und dem Chassis 3. Auf der linken Seite des Straßenfertigers 1 könnte ein analog ausgebildeter Anbringungsbereich 65 vorhanden sein. Das Fahrwerk 5 ist schwenkbar und bezüglich der Einbaufahrtrichtung F längsverschiebbar an einem Lagerblock 67 des Chassis 3 gelagert. Insbesondere kann das Fahrwerk 5 an dem Lagerblock 67 mittels eines Gelenklagers 69 mit integriertem Gleitlager gelagert sein.

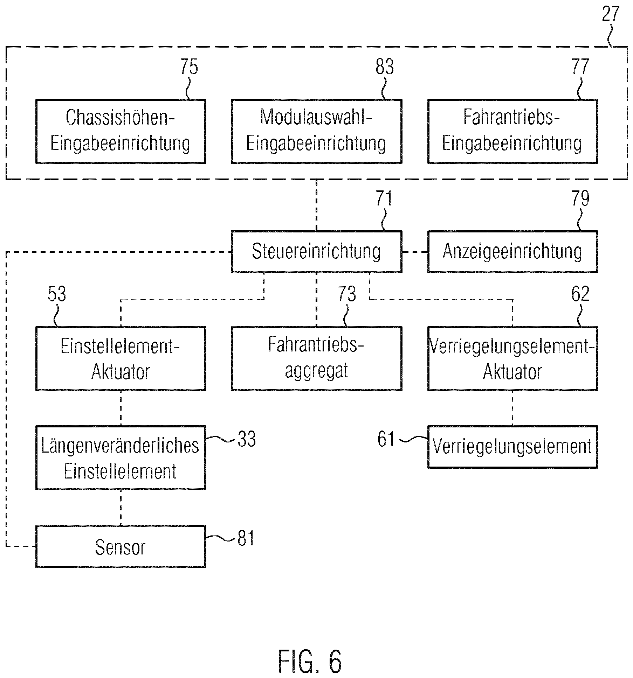

Unter Bezugnahme auf das in Fig. 6 gezeigte Blockdiagramm wird die Steuerung und Bedienung der Anhebeeinrichtung 29 zum Anheben und Absenken des Chassis 3 näher beschrieben. Der Straßenfertiger 1 umfasst eine Steuereinrichtung 71, die dazu ausgelegt ist, durch Ansteuern der Anhebeeinrichtung 29, insbesondere durch Ansteuern des Einstellelement-Aktuators 53, die Länge des längenveränderlichen Einstellelements 33 und somit die Höhe des Chassis 3 gegenüber dem Fahrwerk 5 einzustellen. Vorzugsweise ist das Chassis 3 hierdurch zwischen dem minimal angehobenen Zustand und dem maximal angehobenen Zustand stufenlos höhenverstellbar. Auch das Vorsehen mehrerer diskreter Einstellmöglichkeiten wäre zusätzlich oder alternativ denkbar. Die Steuereinrichtung 71 ist zudem zum Ansteuern des Verriegelungselement-Aktuators 62 konfiguriert, um das Verriegelungselement 61 wahlweise in den verriegelten Zustand, in dem es die Wippe 31 in einer der Transporthöhe des Chassis 3 entsprechenden definierten Relativlage in Bezug auf das Chassis 3 mechanisch verriegelt, oder den Freigabezustand zu verbringen, in dem die mechanische Verriegelung der Wippe 31 in der definierten Relativlage in Bezug auf das Chassis 3 freigegeben ist. Die Steuereinrichtung 71 kann des Weiteren zum Ansteuern eines Fahrantriebsaggregats 73 für die Fahrfunktion des Straßenfertigers 1 konfiguriert sein. Selbstverständlich können auch weitere Funktionen des Straßenfertigers 1 durch die Steuereinrichtung 71 gesteuert werden.

Eine Bedienperson kann mittels der Eingabeeinrichtung 27 des Hauptbedienstands 25 Funktionsanweisungen und Einstellungen an die Steuereinrichtung 71 übermitteln.

Insbesondere kann die Eingabeeinrichtung 27 eine Chassishöhen-Eingabeeinrichtung 75 umfassen, mittels der die Bedienperson eine gewünschte Relativlage zwischen Chassis 3 und Fahrwerk 5 (Höheneinstellung) einstellen kann. Es wäre denkbar, dass die Bedienperson mittels der Chassishöhen-Eingabeeinrichtung 75 einen Wert eingeben kann, welcher einer bestimmten Stellung des Chassis 3 entspricht. Alternativ oder zusätzlich wäre es aber auch denkbar, dass mittels der Chassishöhen-Eingabeeinrichtung 75 ein Einstellen der Höhe des Chassis 3 durch Eingabe einer gewünschten Veränderung gegenüber einem momentan eingestellten Zustand möglich ist.

Die Eingabeeinrichtung 27 kann zudem eine Fahrantriebs-Eingabeeinrichtung 77 umfassen, mittels der die Bedienperson eine gewünschte Fahrgeschwindigkeit und Fahrrichtung des Straßenfertigers 1 einstellen kann und vorzugsweise auch das Fahrantriebsaggregat 73 des Straßenfertigers 1 aktivieren oder deaktivieren kann.

Vorzugsweise ist am Hauptbedienstand 25 zudem eine Anzeigeeinrichtung 79, insbesondere ein Display, vorgesehen, welche von der Steuereinrichtung 71 zum Anzeigen einer momentan vorliegenden Anhebestellung des Chassis 3 gegenüber dem Fahrwerk 5 angesteuert wird. Die Steuereinrichtung 71 kann entsprechende Daten von einem Sensor 81 erhalten, welcher beispielsweise eine momentane Länge des längenveränderlichen Einstellelements 33 oder einen dazu korrespondierenden Wert bestimmt. Mittels der Anzeigeeinrichtung 79 ist die Bedienperson jederzeit über den derzeitigen Betriebszustand der Anhebeeinrichtung 29 informiert.

Es sind verschiedene Betriebsmodi des Straßenfertigers 1 vorgesehen, welche je nach Betriebssituation einsetzbar sind, um einen jeweils situationsgemäß angepassten Betrieb des Straßenfertigers 1 zu ermöglichen. Hierzu umfasst die Eingabeeinrichtung 27 eine Moduswahl-Eingabeeinrichtung 83, mittels der eine Bedienperson einen entsprechenden Betriebsmodus auswählen kann.

Die Bedienperson kann mittels der Moduswahl-Eingabeeinrichtung 83 einen Umsetz-Betriebsmodus auswählen. Der Umsetz-Betriebsmodus ist für Transportfahrten des Straßenfertigers 1 zwischen Einbaueinsätzen ausgelegt. Die Steuereinrichtung 71 ist dazu konfiguriert, das Chassis 3 in Bezug auf das Fahrwerk 5 durch entsprechendes Ansteuern des Einstellelement-Aktuators 53 auf die vorbestimmte Transporthöhe zu bringen, wenn der Umsetz-Betriebsmodus ausgewählt wird. Nach Verbringen des Chassis 3 auf die Transporthöhe steuert die Steuereinrichtung 71 den Verriegelungselement-Aktuator 62 zum mechanischen Festlegen der Lage der Wippe 31 in Bezug auf das Chassis 3 an und sichert so das Chassis 3 mechanisch in der Transporthöhe. So kann gewährleistet werden, dass das Chassis 3 auch bei schnelleren Fahrgeschwindigkeiten des Straßenfertigers 1, wie sie während des Umsetzens des Straßenfertigers 1 auftreten können, ausreichend in seiner Lage gesichert ist. In dem Umsetz-Betriebsmodus ist die Steuereinrichtung 71 bevorzugterweise dazu ausgelegt, eine Fahrgeschwindigkeit des Straßenfertigers 1 auf einen vorbestimmten Maximalwert, welcher beispielsweise geringer als 25 Meter pro Minute ist, zu beschränken, bis das Chassis 3 in die Transporthöhe verfahren wurde und die Wippe 31 mittels des Verriegelungselements 61 mechanisch gesichert wurde. Anschließend können höhere Fahrgeschwindigkeiten freigegeben werden. Vorzugsweise ist in dem Umsetz-Betriebsmodus die Chassishöhen-Eingabeeinrichtung 75 wirkungslos geschaltet, sodass kein Verstellen der Chassishöhe aus der Transporthöhe heraus möglich ist. In dem Umsetz-Betriebsmodus erlaubt die Steuereinrichtung 71 sowohl eine Vorwärtsfahrt als auch eine Rückwärtsfahrt des Straßenfertigers 1.

Ein weiterer mittels der Moduswahl-Eingabeeinrichtung 83 einstellbarer Betriebsmodus ist ein Ansetz-Betriebsmodus. Dieser ist insbesondere dafür geeignet, den Straßenfertiger 1 direkt vor Beginn des Einbaus geeignet zu positionieren und einzustellen und so in einen geeigneten Startzustand zu bringen. Die Steuereinrichtung 71 ist dazu konfiguriert, das Verriegelungselement 61 automatisch in den Freigabezustand zu versetzen (sofern das Verriegelungselement 61 nicht bereits in dem Freigabezustand vorliegt), wenn der Ansetz-Betriebsmodus ausgewählt wird. Zudem ist die Steuereinrichtung 71 dazu konfiguriert, in dem Ansetz-Betriebsmodus die Höhenverstellung des Chassis 3 durch Ansteuern des Einstellelement-Aktuators 53 basierend auf mittels der Chassishöhen-Eingabeeinrichtung 75 getätigten Benutzereingaben oder auf einem automatischen Ansetzprogramm durchzuführen. Die Höhe des Chassis 3 kann sowohl bei stehendem Straßenfertiger 1 als auch während des Fahrens verstellt werden. In dem Ansetz-Betriebsmodus erlaubt die Steuereinrichtung 71 sowohl eine Vorwärtsfahrt als auch eine Rückwärtsfahrt des Straßenfertigers 1.

Des Weiteren ist mittels der Moduswahl-Eingabeeinrichtung 83 ein Einbau-Betriebsmodus auswählbar. Die Steuereinrichtung 71 ist dazu konfiguriert, das Verriegelungselement 61 in den Freigabezustand zu verbringen, wenn der Einbau-Betriebsmodus ausgewählt wird, zumindest sofern sich das Verriegelungselement 61 nicht bereits in dem Freigabezustand befindet. Die Steuereinrichtung 71 ist dazu konfiguriert, in dem Einbau-Betriebsmodus die Höhe des Chassis 3 in Bezug auf das Fahrwerk 5 durch Ansteuern des Einstellelement-Aktuators 53 basierend auf mittels der Chassishöhen-Eingabeeinrichtung 75 getätigten Benutzereingaben oder auf einem automatischen Einbauprogramm durchzuführen. In dem Einbau-Betriebsmodus erlaubt die Steuereinrichtung 71 eine Vorwärtsfahrt, unterbindet jedoch eine Rückwärtsfahrt des Straßenfertigers 1.

Vorzugsweise ist die Steuereinrichtung 71 dazu konfiguriert, die Länge des längenveränderlichen Einstellelements 33 in dem Ansetz-Betriebsmodus mit einer größeren Verstellgeschwindigkeit zu verstellen als in dem Einbau-Betriebsmodus. So kann beim Ansetzen des Straßenfertigers 1 die Einsatzbereitschaft des Straßenfertigers 1 schnell hergestellt werden, während beim Einbau durch die langsamere Verstellgeschwindigkeit eine Verschlechterung der Fahrbahnqualität durch zu abrupte Einstellungen vermieden wird.

Mittels der Moduswahl-Eingabeeinrichtung 83 kann auch ein Neutral-Betriebsmodus ausgewählt werden. In dem Neutral-Betriebsmodus erlaubt die Steuereinrichtung 71 kein Betätigen der Anhebeeinrichtung 29, insbesondere kein Verändern der Länge des längenveränderlichen Einstellelements 33.

Zusätzlich oder alternativ zu der Chassishöhen-Eingabeeinrichtung 75, der Moduswahl-Eingabeeinrichtung 83 und der Fahrantriebs-Eingabeeinrichtung 77 der Eingabeeinrichtung 27 des Hauptbedienstands 25 können eine Chassishöhen-Eingabeeinrichtung 75, eine Moduswahl-Eingabeeinrichtung 83 und eine Fahrantriebs-Eingabeeinrichtung 77 entsprechender Konfiguration auch an der Eingabeeinrichtung 27 des Außenbedienstands 28 vorgesehen sein. Auch ein Vorsehen der Anzeigeeinrichtung 79 bzw. einer zusätzlichen Anzeigeeinrichtung 79 an dem Außenbedienstand 28 ist denkbar.

## Patentansprüche

1. Straßenfertiger (1) mit
einem Fahrwerk (5);
einem Chassis (3);
einem bezüglich einer Einbaufahrtrichtung (F) vorne am Straßenfertiger (1) an dem Chassis (3) angebrachten Gutbunker (7) zur Aufnahme von Einbaugut;
einer bezüglich der Einbaufahrtrichtung (F) hinten am Straßenfertiger (1) vorgesehenen Einbaubohle (17) zum Verdichten von Einbaugut, welche mittels Zugholmen (9) an dem Chassis (3) angebracht ist; und
einer Anhebeeinrichtung (29), welche dazu ausgelegt ist, das Chassis (3) gegenüber dem Fahrwerk (5) zumindest in einem hinteren Bereich des Straßenfertigers (1) anzuheben,
**gekennzeichnet durch**
ein Verriegelungselement (61), welches zwischen einem verriegelten Zustand, in dem das Verriegelungselement (61) das Chassis (3) in einer vordefinierten Transporthöhe gegenüber dem Fahrwerk (5) mechanisch verriegelt, und einem Freigabezustand verfahrbar ist, in dem die mechanische Verriegelung des Chassis (3) in der Transporthöhe aufgehoben ist; und
einen Verriegelungselement-Aktuator (62) zum Verfahren des Verriegelungselements (61) zwischen dem verriegelten Zustand und dem Freigabezustand.

2. Straßenfertiger nach Anspruch 1, welcher zudem Folgendes umfasst:
eine Steuereinrichtung (71), die zum Ansteuern der Anhebeeinrichtung (29) zum wahlweisen Anheben oder Absenken des Chassis (3) gegenüber dem Fahrwerk (5) und zum Ansteuern des Verriegelungselement-Aktuators (62) zum Verfahren des Verriegelungselements (61) zwischen dem verriegelten Zustand und dem Freigabezustand konfiguriert ist; und
eine Moduswahl-Eingabeeinrichtung (83), mittels welcher ein Benutzer aus einem von mehreren Betriebsmodi des Straßenfertigers (1) auswählen kann,
wobei die Steuereinrichtung (71) dazu konfiguriert ist, abhängig von dem jeweils ausgewählten Betriebsmodus die Anhebeeinrichtung (29) und den Verriegelungselement-Aktuator (62) gemäß unterschiedlicher Steuerschemata anzusteuern.

3. Straßenfertiger nach Anspruch 2, wobei mittels der Moduswahl-Eingabeeinrichtung (83) ein Umsetz-Betriebsmodus auswählbar ist, wobei die Steuereinrichtung (71) dazu konfiguriert ist, das Chassis (3) automatisch durch Ansteuern der Anhebeeinrichtung (29) in die Transporthöhe zu bringen, wenn der Umsetz-Betriebsmodus ausgewählt wird, und nach dem Verbringen des Chassis (3) in die Transporthöhe den Verriegelungselement-Aktuator (62) zum Verfahren des Verriegelungselements (61) in die verriegelte Position anzusteuern.

4. Straßenfertiger nach Anspruch 3, wobei die Steuereinrichtung (71) dazu konfiguriert ist, in dem Umsetz-Betriebsmodus eine Fahrgeschwindigkeit des Straßenfertigers (1) auf einen vorbestimmten Maximalwert zu beschränken, bis das Chassis (3) in der Transporthöhe verriegelt ist, und anschließend eine höhere Fahrgeschwindigkeit freizugeben.

5. Straßenfertiger nach Anspruch 3 oder 4, wobei die Steuereinrichtung (71) dazu konfiguriert ist, in dem Umsetz-Betriebsmodus sowohl eine Vorwärtsfahrt als auch eine Rückwärtsfahrt des Straßenfertigers (1) zu erlauben.

6. Straßenfertiger nach einem der Ansprüche 2 bis 5, wobei mittels der Moduswahl-Eingabeeinrichtung (83) ein Ansetz-Betriebsmodus auswählbar ist, wobei die Steuereinrichtung (71) dazu konfiguriert ist, das Verriegelungselement (61) automatisch in den Freigabezustand zu verbringen, wenn der Ansetz-Betriebsmodus ausgewählt wird, und in dem Ansetz-Betriebsmodus eine Höhenverstellung des Chassis (3) durch Ansteuern der Anhebeeinrichtung (29) basierend auf Benutzereingaben und/oder einem automatischen Ansetzprogramm durchzuführen.

7. Straßenfertiger nach Anspruch 6, wobei die Steuereinrichtung (71) dazu konfiguriert ist, in dem Ansetz-Betriebsmodus sowohl eine Vorwärtsfahrt als auch eine Rückwärtsfahrt des Straßenfertigers (1) zu erlauben.

8. Straßenfertiger nach einem der Ansprüche 2 bis 7, wobei mittels der Moduswahl-Eingabeeinrichtung (83) ein Einbau-Betriebsmodus auswählbar ist, wobei die Steuereinrichtung (71) dazu konfiguriert ist, das Verriegelungselement (61) automatisch in den Freigabezustand zu verbringen, wenn der Einbau-Betriebsmodus ausgewählt wird, und in dem Einbau-Betriebsmodus eine Höhenverstellung des Chassis (3) durch Ansteuern der Anhebeeinrichtung (29) basierend auf Benutzereingaben oder einem automatischen Einbauprogramm durchzuführen.

9. Straßenfertiger nach einem der Ansprüche 6 bis 8, wobei die Steuereinrichtung (71) dazu konfiguriert ist, die Chassishöhe (3) in dem Ansetz-Betriebsmodus mit einer höheren Verstellgeschwindigkeit zu verstellen als in dem Einbau-Betriebsmodus.

10. Straßenfertiger nach Anspruch 8 oder 9, wobei die Steuereinrichtung (71) dazu konfiguriert ist, in dem Einbau-Betriebsmodus eine Vorwärtsfahrt des Straßenfertigers (1) zu erlauben und eine Rückwärtsfahrt des Straßenfertigers (1) zu unterbinden.

11. Straßenfertiger nach einem der Ansprüche 2 bis 10, wobei mittels der Moduswahl-Eingabeeinrichtung (83) ein Neutral-Betriebsmodus auswählbar ist, wobei die Steuereinrichtung (71) dazu konfiguriert ist, in dem Neutral-Betriebsmodus ein Verstellen der Chassishöhe mittels der Anhebeeinrichtung (29) zu unterbinden.

12. Straßenfertiger nach einem der Ansprüche 2 bis 11, welcher zudem eine Anzeigeeinrichtung (79) umfasst, wobei die Steuereinrichtung (71) dazu ausgelegt ist, die Anzeigeeinrichtung (79) zum Anzeigen eines aktuellen Anhebezustands des Chassis (3) gegenüber dem Fahrwerk (5) anzusteuern.

13. Straßenfertiger nach einem der vorangehenden Ansprüche, wobei die Anhebeeinrichtung (29) eine Wippe (31) umfasst, welche um eine Fahrwerk-Drehachse (A) drehbar an einer fahrwerkseitigen Lagerfläche (35) gelagert ist und um eine Chassis-Drehachse (B) drehbar an einer chassisseitigen Lagerfläche (43) gelagert ist, und
wobei die Anhebeeinrichtung (29) zudem ein längenveränderliches Einstellelement (33) umfasst, welches einen chassisseitigen Anlenkpunkt (49) mit einem wippenseitigen Anlenkpunkt (51) verbindet, und dazu konfiguriert ist, durch Verändern seiner Länge einen Abstand zwischen dem chassisseitigen Anlenkpunkt (49) und dem wippenseitigen Anlenkpunkt (51) zu verändern und so das Chassis (3) gegenüber dem Fahrwerk (5) wahlweise anzuheben oder abzusenken.

14. Straßenfertiger nach Anspruch 13, wobei an dem Chassis (3) ein unterer Anschlag (57) vorgesehen ist, welcher dazu konfiguriert ist, in einem maximal abgesenkten Zustand des Chassis (3) das Chassis (3) durch Eingriff mit der Wippe (31) gegen ein weiteres Absenken zu sichern.

15. Straßenfertiger nach Anspruch 13 oder 14, wobei an dem Chassis (3) ein oberer Anschlag (59) vorgesehen ist, welcher dazu konfiguriert ist, in einem maximal angehobenen Zustand des Chassis (3) das Chassis (3) durch Eingriff mit der Wippe (31) gegen ein weiteres Anheben zu sichern, und/oder welcher als Sicherung gegen ein Überdrehen der Anhebeeinrichtung (29) dient.

16. Straßenfertiger nach einem der Ansprüche 13 bis 15, wobei das Verriegelungselement (61) dazu konfiguriert ist, die Wippe (31) in einer definierten Relativlage in Bezug auf das Chassis (3) mechanisch zu verriegeln, in der das Chassis (3) in der Transporthöhe vorliegt.

## Claims

1. Road finisher (1) comprising
an undercarriage (5);
a chassis (3);
a hopper (7), which is mounted on the chassis (3) at the front of the road finisher (1) with respect to a paving direction (F) for receiving paving material;
a paving screed (17) provided at the rear of the road finisher (1) with respect to the paving direction (F) for compacting paving material, said paving screed being attached to the chassis (3) by means of tie bars (9); and
a lifting device (29) adapted to lift the chassis (3) relative to the undercarriage (5) at least in a rear region of the road finisher (1),
**characterized by**
a locking element (61) which is movable between a locked state, in which the locking element (61) mechanically locks the chassis (3) at a predefined transport height relative to the undercarriage (5), and a release state, in which the mechanical locking of the chassis (3) at the transport height is cancelled; and
a locking element actuator (62) for moving the locking element (61) between the locked state and the release state.

2. Road finisher according to claim 1, which further comprises:
a control device (71) configured to control said lifting device (29) to selectively lift or lower said chassis (3) with respect to said undercarriage (5) and to control said locking element actuator (62) to move said locking element (61) between said locked state and said release state; and
a mode selection input device (83) by means of which a user can select from one of a plurality of operating modes of the road finisher (1),
the control device (71) being configured to control the lifting device (29) and the locking element actuator (62) according to different control schemes depending on the selected operating mode.

3. Road finisher according to claim 2, wherein a transfer operating mode is selectable by means of the mode selection input device (83), wherein the control device (71) is configured to automatically bring the chassis (3) to the transport height by controlling the lifting device (29) when the transfer operating mode is selected, and after moving the chassis (3) to the transport height to control the locking element actuator (62) to move the locking element (61) to the locked position.

4. Road finisher according to claim 3, wherein the control device (71) is configured to limit a driving speed of the road finisher (1) to a predetermined maximum value in the transfer operating mode until the chassis (3) is locked at the transport height and then to release a higher driving speed.

5. Road finisher according to claim 3 or 4, wherein the control device (71) is configured to allow both forward drive and reverse drive of the road finisher (1) in the transfer operating mode.

6. Road finisher according to one of claims 2 to 5, wherein a setting operation mode is selectable by means of the mode selection input device (83), wherein the control device (71) is configured to automatically bring the locking element (61) into the release state when the setting operation mode is selected, and in the setting operation mode to perform a height adjustment of the chassis (3) by controlling the lifting device (29) based on user input and/or an automatic setting program.

7. Road finisher according to claim 6, wherein the control device (71) is configured to allow both forward driving and reverse driving of the road finisher (1) in the setting operating mode.

8. Road finisher according to one of claims 2 to 7, wherein a paving operating mode is selectable by means of the mode selection input device (83), wherein the control device (71) is configured to automatically bring the locking member (61) into the release state when the paving operating mode is selected, and to perform a height adjustment of the chassis (3) in the paving operating mode by driving the lifting device (29) based on user input or an automatic paving program.

9. Road finisher according to one of claims 6 to 8, wherein the control device (71) is configured to adjust the chassis height (3) at a higher adjustment speed in the setting operating mode than in the paving operating mode.

10. Road finisher according to claim 8 or 9, wherein the control device (71) is configured to permit forward driving of the road finisher (1) and to prevent reverse driving of the road finisher (1) in the paving operating mode.

11. Road finisher according to one of claims 2 to 10, wherein a neutral operating mode is selectable by means of the mode selection input device (83), wherein the control device (71) is configured to prevent, in the neutral operating mode, adjustment of the chassis height by means of the lifting device (29).

12. Road finisher according to one of claims 2 to 11 further comprising a display device (79), the control device (71) being adapted to control the display device (79) to display a current lifting state of the chassis (3) relative to the undercarriage (5).

13. Road finisher according to one of the preceding claims, wherein lifting device (29) comprises a rocker (31) which is mounted rotatably about an undercarriage rotation axis (A) on an undercarriage-side bearing surface (35) and mounted rotatably about a chassis rotation axis (B) on a chassis-side bearing surface (43),
wherein the lifting device (29) further comprises a length-variable adjustment element (33) connecting a chassis-side link point (49) to a rocker-side link point (51) and being configured to change, by changing its length, a distance between the chassis-side link point (49) and the rocker-side link point (51) and to thereby selectively lift or lower the chassis (3) relative to the undercarriage (5).

14. Road finisher according to claim 13, wherein a lower abutment (57) is provided at the chassis (3), said lower abutment being configured to secure the chassis (3) against further lowering by engagement with the rocker (31) in a maximum lowered state of the chassis (3).

15. Road finisher according to claim 13 or 14, wherein and upper abutment (59) is provided at the chassis (3), said upper abutment (59) being configured, in a maximum lifted state of the chassis (3), to secure the chassis (3) against further lifting by engagement with the rocker (31) and/or which serves as a safety device against overturning of the lifting device (29).

16. Road finisher according to one of claims 13 to 15, wherein the locking element (61) is configured to mechanically lock the rocker (31) in a defined relative position with respect to the chassis (3) in which the chassis (3) is at the transport height.

## Revendications

1. Finisseuse de route (1) avec
un train d'atterrissage (5);
un châssis (3) ;
une trémie à matériaux (7) montée sur le châssis (3) à l'avant de la finisseuse de route (1) par rapport à un sens de marche (F) pour recevoir les matériaux à paver;
une table de pose (17) pour le compactage du matériau de la chaussée, qui est prévue à l'arrière de la finisseuse (1) par rapport au sens de la marche (F) et qui est fixée au châssis (3) au moyen de tirants (9)
un dispositif de levage (29) qui est conçu pour soulever le châssis (3) par rapport au train de roulement (5) au moins dans une zone arrière de la finisseuse de route (1),
**caractérisé par**
un élément de verrouillage (61) qui peut être déplacé entre un état de verrouillage, dans lequel l'élément de verrouillage (61) verrouille mécaniquement le châssis (3) à une hauteur de transport prédéfinie par rapport au train de roulement (5), et un état de libération, dans lequel le verrouillage mécanique du châssis (3) à la hauteur de transport est libéré; et
un actionneur d'élément de verrouillage (62) pour déplacer l'élément de verrouillage (61) entre l'état verrouillé et l'état libéré.

2. Finisseuse de route selon la revendication 1, qui comprend également:
un dispositif de commande (71) configuré pour entraîner le dispositif de levage (29) pour lever ou abaisser sélectivement le châssis (3) par rapport au train d'atterrissage (5) et pour entraîner l'actionneur de l'élément de verrouillage (62) pour déplacer l'élément de verrouillage (61) entre l'état verrouillé et l'état libéré; et
un moyen de saisie de sélection de mode (83) par lequel un utilisateur peut sélectionner l'un des nombreux modes de fonctionnement de la finisseuse de route (1),
dans lequel le dispositif de commande (71) est configuré pour commander le dispositif de levage (29) et l'actionneur de l'élément de verrouillage (62) selon différents schémas de commande en fonction du mode de fonctionnement respectivement sélectionné.

3. Finisseuse de route selon la revendication 2, dans laquelle un mode de fonctionnement en translation peut être sélectionné au moyen du moyen de saisie de sélection de mode (83), dans lequel le moyen de commande (71) est configuré pour amener le châssis (3) automatiquement à la hauteur de transport en entraînant le moyen de levage (29) lorsque le mode de fonctionnement en translation est sélectionné, et après avoir amené le châssis (3) à la hauteur de transport, pour entraîner l'actionneur d'élément de verrouillage (62) afin de déplacer l'élément de verrouillage (61) vers la position verrouillée.

4. Finisseuse de route selon la revendication 3, dans laquelle le moyen de commande (71) est configuré pour limiter une vitesse de déplacement de la finisseuse de route (1) à une valeur maximale prédéterminée dans le mode de fonctionnement de transfert jusqu'à ce que le châssis (3) soit verrouillé à la hauteur de transport, et ensuite pour permettre une vitesse de déplacement plus élevée.

5. Finisseuse de route selon les revendications 3 ou 4, dans laquelle le moyen de commande (71) est configuré pour permettre à la fois la marche avant et la marche arrière de la finisseuse de route (1) dans le mode de fonctionnement de transfert.

6. Finisseuse de route selon l'une quelconque des revendications 2 à 5, dans laquelle un mode de fonctionnement d'accessoire peut être sélectionné au moyen du moyen de saisie de sélection de mode (83), dans lequel le moyen de commande (71) est configuré pour amener automatiquement l'élément de verrouillage (61) dans l'état de libération lorsque le mode de fonctionnement d'accessoire est sélectionné, et pour effectuer un ajustement de la hauteur du châssis (3) dans le mode de fonctionnement d'accessoire en actionnant le moyen de levage (29) sur la base des entrées de l'utilisateur et/ou d'un programme d'accessoire automatique.

7. Finisseuse de route selon la revendication 6, dans laquelle le moyen de commande (71) est configuré pour permettre à la fois la marche avant et la marche arrière de la finisseuse de route (1) dans le mode de fonctionnement de départ.

8. Finisseuse de route selon l'une quelconque des revendications 2 à 7, dans laquelle un mode de fonctionnement de pavage peut être sélectionné au moyen du moyen de saisie de sélection de mode (83), dans laquelle le moyen de commande (71) est configuré pour amener automatiquement l'élément de verrouillage (61) dans l'état de libération lorsque le mode de fonctionnement de pavage est sélectionné, et pour effectuer un réglage de la hauteur du châssis (3) dans le mode de fonctionnement de pavage en actionnant le moyen de levage (29) sur la base des entrées de l'utilisateur ou d'un programme de pavage automatique.

9. Finisseur de route selon l'une quelconque des revendications 6 à 8, dans laquelle le moyen de commande (71) est configuré pour régler la hauteur du châssis (3) en mode réglage à une vitesse de réglage plus élevée qu'en mode pavage.

10. Finisseuse de route selon les revendications 8 ou 9, dans laquelle le moyen de commande (71) est configuré pour permettre la marche avant de la finisseuse de route (1) et pour empêcher la marche arrière de la finisseuse de route (1) dans le mode de fonctionnement de pavage.

11. Finisseuse de route selon l'une quelconque des revendications 2 à 10, dans laquelle un mode de fonctionnement neutre peut être sélectionné au moyen d'un moyen de saisie de sélection de mode (83), dans laquelle le moyen de commande (71) est configuré pour empêcher le réglage de la hauteur du châssis au moyen d'un moyen de levage (29) dans le mode de fonctionnement neutre.

12. Finisseuse de route selon l'une quelconque des revendications 2 à 11, qui comprend en outre un dispositif d'affichage (79), dans laquelle le dispositif de commande (71) est conçu pour commander le dispositif d'affichage (79) afin d'afficher un état de levage actuel du châssis (3) par rapport au train de roulement (5).

13. Finisseuse de route selon l'une des revendications précédentes, dans laquelle le dispositif de levage (29) comprend une bascule (31) qui est montée sur une surface d'appui (35) côté châssis de manière à pouvoir tourner autour d'un axe de rotation (A) du châssis et est montée sur une surface d'appui (43) côté châssis de manière à pouvoir tourner autour d'un axe de rotation (B) du châssis, et
dans laquelle le dispositif de levage (29) comprend également un élément de réglage (33) réglable en longueur qui relie un point d'articulation (49) du côté du châssis à un point d'articulation (51) du côté du basculeur et est configuré pour modifier une distance entre le point d'articulation (49) du côté du châssis et le point d'articulation (51) du côté du basculeur en changeant sa longueur et donc pour lever ou abaisser au choix le châssis (3) par rapport au train de roulement (5).

14. Finisseuse de route selon la revendication 13, dans laquelle une butée inférieure (57) est prévue sur le châssis (3), qui est configurée pour empêcher le châssis (3) de s'abaisser davantage par engagement avec la bascule (31) dans un état d'abaissement maximal du châssis (3).

15. Finisseuse selon les revendications 13 ou 14, dans laquelle une butée supérieure (59) est prévue sur le châssis (3), laquelle butée est configurée pour empêcher le châssis (3) de se soulever davantage par engagement avec la bascule (31) dans un état soulevé au maximum du châssis (3) et/ou qui sert de protection contre la sur-rotation du dispositif de levage (29).

16. Finisseuse de route selon l'une des revendications 13 à 15, dans laquelle l'élément de verrouillage (61) est configuré pour verrouiller mécaniquement la bascule (31) dans une position relative définie par rapport au châssis (3), dans laquelle le châssis (3) se trouve à la hauteur de transport.
